# FASCICULE DE BREVET EUROPEEN

(11) **EP 1 334 310 B1**
(45) Date de publication et mention de la délivrance du brevet: **08.02.2006**
(21) Numéro de dépôt: 01992860.5
(22) Date de dépôt: 29.10.2001
(51) Int. Cl.: F23D 14/22, C01B 17/04

(54) **BRULEUR ET PROCEDE D'OXYDATION PARTIELLE D'UN FLUX DE GAZ COMPRENANT DU SULFURE D'HYDROGENE ET DE L'AMMONIAC**
BRENNER UND VERFAHREN ZUR PARTIELLEN OXIDATION EINES SCHWEFELWASSERSTOFF UND AMMONIAK ENTHALTENDEN GASSTROMES
BURNER AND METHOD FOR PARTLY OXIDISING A GAS STREAM COMPRISING HYDROGEN SULPHIDE AND AMMONIA

(30) Priorité: 02.11.2000 FR 0014066
(43) Date de publication de la demande: 13.08.2003
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: TSIAVA, Rémi, Pierre, F-91250 Saint Germain les Corbeil (FR); BINOIST, Manuel, F-75020 Paris (FR); GRAND, Benoît, F-78000 Versailles (FR); SOULA, Richard, F-78210 St Cyr l Ecole (FR); CIEUTAT, Denis, F-92200 Neuilly sur Seine (FR)
(74) Mandataire: Ducreux, Marie
(86) Numéro de dépôt international: PCT/FR2001/003359
(87) Numéro de publication internationale: WO 2002/037025

(56) Documents cités:
- EP-A- 0 080 216
- EP-A- 0 763 692
- EP-A- 0 974 552
- EP-B- 0 810 974
- US-A- 4 035 158
- US-A- 4 988 287

## Description

La présente invention concerne un brûleur et un procédé d'oxydation partielle, dans un four Claus, d'un flux de gaz comprenant du sulfure d'hydrogène et de l'ammoniac par réaction avec un flux d'un gaz riche en oxygène.

Des flux gazeux riches en sulfure d'hydrogène sont des déchets produits par de nombreuses industries, notamment l'industrie du raffinage du pétrole et de la production de gaz naturel. Pour des raisons liées notamment à l'environnement, ces gaz riches en sulfure d'hydrogène ne peuvent être libérés tels quels dans l'atmosphère. Il est donc nécessaire de les traiter en vue de réduire notablement leur teneur en sulfure d'hydrogène. Un procédé bien connu pour traiter ces gaz riches en sulfure d'hydrogène est le procédé Claus modifié communément appelé Claus.

Ce procédé comprend une partie thermique et une partie catalytique. Dans la partie thermique sont réalisés deux réactions principales. La première réaction consiste à faire réagir une partie du sulfure d'hydrogène avec de l'oxygène pour produire de l'eau et du dioxyde de soufre de la manière suivante :

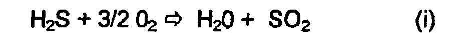

Par cette première réaction, on procède à l'oxydation d'environ 1/3 du sulfure d'hydrogène à traiter. Les 2/3 restants sont mis à réagir avec le dioxyde de soufre formé au cours de la première étape ci-dessus, selon la réaction suivante, dite réaction de Claus :

2 H₂S + SO₂ ⇔ 3/2 S₂+ 2 H₂O (ii)

Les produits de combustion sont ensuite refroidis dans une chaudière de récupération de chaleur puis dans un premier condenseur dans lequel le soufre élémentaire est récupéré sous forme liquide. Les gaz sont ensuite réchauffés à une température permettant leur traitement sur un ou plusieurs lits catalytiques (chacun de ces lits étant suivi d'un condenseur). Sur les lits catalytiques, la réaction de Claus se poursuit jusqu'à l'obtention d'un taux de conversion en sulfure d'hydrogène compatible avec les normes de rejet en dioxyde de soufre provenant de l'ultime étape du procédé qui est l'incinération de l'H₂S résiduel. Dans le cas où deux ou trois lits catalytiques ne permettent pas d'atteindre les normes de rejet en dioxyde de soufre, une unité de traitement de gaz de queue peut être ajoutée avant envoi des gaz résiduaires à l'incinérateur final.

Les flux gazeux riches en sulfure d'hydrogène traités en raffinerie peuvent parfois contenir de l'ammoniac en plus du sulfure d'hydrogène. C'est le cas, par exemple, des gaz résiduaires issus des stripeurs d'eaux acides dans lesquels les condensats de procédés (par exemple, étape d'hydrocraquage ou de craquage catalytique en particulier pour des charges lourdes d'hydrodésulfuration) sont strippés à la vapeur afin de récupérer le sulfure d'hydrogène et l'ammoniac. Ces gaz sont typiquement composés d'un tiers de sulfure d'hydrogène, d'un tiers d'ammoniac et d'un tiers de vapeur d'eau.

Lors du traitement de ces flux gazeux selon le procédé Claus, la destruction de l'ammoniac doit y être la plus complète possible sous peine de problèmes opérationnels sévères dans l'unité Claus. En effet, en aval de la chaudière de récupération de chaleur, des dépôts de sels ammoniaqués dans les lignes froides ou en sortie des condenseurs peuvent entraîner des bouchages, une dégradation des performances de l'unité et au final une augmentation des émissions en dioxyde de soufre. Lors de la mise en oeuvre du procédé Claus, la destruction de l'ammoniac peut être obtenue par différentes réactions chimiques (oxydation, dissociation thermique) qui ont lieu simultanément à la première réaction (i) du procédé Claus..

Il est reconnu que la destruction de l'ammoniac présent dans les gaz contenant du sulfure d'hydrogène est favorisée par une haute température. Cette destruction peut être mise en oeuvre avec des procédés d'oxydation Claus ne mettant en oeuvre que de l'air ou des procédés mettant en oeuvre à la fois de l'air et de l'oxygène.

Dans les procédés d'oxydation ne mettant en oeuvre que de l'air, le traitement des gaz contenant du sulfure d'hydrogène et de l'ammoniac peut se faire :
- soit par utilisation d'un four à deux zones avec by-pass d'une partie ou de la totalité des gaz ne contenant pas d'ammoniac. Cette solution permet d'augmenter la température de la première zone dans laquelle la totalité du gaz contenant l'ammoniac est oxydé. Son inconvénient est qu'elle peut entraîner une mauvaise destruction des contaminants du type hydrocarbures ou amines présents dans le gaz ne contenant pas d'ammoniac et créer d'autres problèmes que le dépôt de sels ammoniaqués (par exemple : cokage des catalyseurs en aval),
- soit par utilisation du gaz combustible de raffinerie (dit "fuel gas" en anglais) pour augmenter la température dans le four de réaction. Le principal inconvénient de cette mise en oeuvre est l'augmentation de la quantité de gaz passant au travers de l'unité, ceci pouvant mener à un goulot d'étranglement. De plus, l'introduction de gaz combustible de raffinerie dans le four Claus a tendance à augmenter les teneurs en CS₂ et en COS dans le cas où le gaz combustible contient beaucoup de CO₂, dans les gaz issus du four Claus, ce qui entraîne à une baisse des performances des lits catalytiques en aval du four.

Dans les procédés d'oxydation mettant en oeuvre à la fois de l'air et de l'oxygène, c'est-à-dire où l'air de combustion est remplacé par un mélange d'air et d'oxygène, il est possible d'obtenir un meilleur traitement des gaz contenant du sulfure d'hydrogène et de l'ammoniac car l'enrichissement de l'air de combustion par de l'oxygène augmente la température dans le four de réaction et améliore ainsi la destruction de l'ammoniac. Mais, dans ce cas, on augmente non seulement la température des gaz contenant de l'ammoniac, mais également celle des gaz ne contenant pas d'ammoniac ; la quantité d'oxygène utilisée n'est donc pas optimisée. En outre, la température obtenue n'est pas toujours compatible avec les caractéristiques métallurgiques du brûleur utilisé.

Pour résoudre le problème de l'utilisation de l'oxygène spécifiquement pour augmenter la température du gaz comprenant de l'ammoniac, il a été proposé des brûleurs spécifiques permettant une alimentation séparée :
- de l'air,
- de l'oxygène pur ou de l'air enrichi en oxygène,
- des gaz contenant de l'ammoniac,
- des gaz ne contenant pas d'ammoniac.

Par utilisation de ces brûleurs Claus spécifiques permettant un confinement séparés des flux des différents gaz, il a été possible d'obtenir à l'intérieur de la flamme des zones plus ou moins chaudes. Ceci autorise des élévations de température localisées dédiées à la destruction de l'ammoniac et permet de garder simultanément une température plus "froide" pour l'oxydation des autres gaz et au contact des réfractaires du four. Ce type de brûleur est décrit par exemple dans les demandes EP-A1-0 810 974 et EP-A1-0 974 552.

Le dimensionnement de ces brûleurs Claus est réalisé, entre autres caractéristiques, à partir d'un gaz ammoniaqué de référence présentant une teneur moyenne en ammoniac et un débit moyen. Par dimensionnement, on entend essentiellement les diamètres des tubes d'alimentation du brûleur en différents gaz. Or, selon les conditions de fonctionnement des unités de raffinage situées en amont de l'unité Claus (par exemple sévérité de l'hydrocraqueur ou de l'unité d'hydrodésulfuration), la teneur en ammoniac du gaz à traiter peut varier fortement de manière temporaire ou non par rapport à la teneur du gaz ammoniaqué de référence. Par exemple, pour un site de raffinage comportant un hydrocraqueur, selon que cet hydrocraqueur est en fonctionnement ou non, la teneur en ammoniac du gaz à traiter peut varier entre 15 et 35 %. Cette variation peut également être due à un mauvais fonctionnement de l'unité de stripage des eaux acides (par exemple disfonctionnement du condenseur). La quantité d'oxygène à injecter pour détruire totalement l'ammoniac est alors différente et donc le dimensionnement du brûleur Claus doit être différent si l'on souhaite obtenir une élimination optimale de l'ammoniac dans l'unité Claus. Or, changer le dimensionnement du brûleur signifie changer le brûleur lui-même, ce qui ne peut être envisagé pour chaque changement notable du gaz à traiter.

Le problème de la présente invention est donc de répondre aux variations des caractéristiques moyennes du gaz contenant de l'ammoniac, notamment de sa teneur en NH₃, à traiter dans un brûleur Claus à alimentations en gaz séparées.

Un but de la présente invention est de proposer un procédé d'oxydation dans un four Claus permettant une destruction complète de l'ammoniac.

Un autre but est de proposer un procédé d'oxydation dans un four Claus permettant une destruction complète de l'ammoniac quelle que soit la teneur moyenne en ammoniac du gaz à oxyder.

Dans ces buts, l'invention concerne tout d'abord un brûleur de gaz pour four Claus composé d'au moins cinq tubes concentriques (T1-T5), formant cinq espaces concentriques pour l'introduction de gaz, le premier tube (T1) étant le tube de plus petit diamètre et le cinquième tube (T5) étant celui de plus grand diamètre, dans lequel :
- les extrémités du côté du four Claus des troisième, quatrième et cinquième tubes sont dans le même plan,
- les deux tubes centraux (T1, T2) sont solidaires l'un par rapport à l'autre et mobiles selon l'axe longitudinal central du brûleur par rapport aux autres tubes (T3-T5), leurs extrémités du côté du four Claus ne pouvant dépasser le plan formé par les extrémités des trois autres tubes,
- l'espace formé entre les premier et deuxième tubes (T1, T2) se termine du côté du four Claus par un injecteur orienté vers la périphérie du brûleur dans le sens d'injection des gaz dans le brûleur.

D'autres caractéristiques et avantages de l'invention apparaîtront à la lecture de la description qui va suivre. Des formes et des modes de réalisation de l'invention sont donnés à titre d'exemples, illustrés par les dessins joints dans lesquels :
- la figure 1 est une coupe schématique et partielle de l'extrémité d'un brûleur selon l'invention,
- la figure 2 est une vue schématique de face d'un brûleur selon l'invention,
- la figure 3 est un détail d'un brûleur selon l'invention.

L'invention concerne donc un brûleur permettant l'introduction de gaz par cinq voies différentes séparées les unes des autres par des tubes co-axiaux. D'un côté, les extrémités des ces tubes débouchent dans le four Claus où sont brûlés les gaz injectés. De l'autre côté, chacun de ces tubes est relié à une source de gaz. Les trois tubes de plus grands diamètres (T3, T4, T5) sont fixes. Les extrémités du côté du four de ces trois tubes se trouvent dans un même plan perpendiculaire à l'axe central des tubes. Les deux tubes de plus petits diamètres (T1, T2) sont fixes l'un par rapport à l'autre et leurs extrémités du côté du four se trouvent dans un même plan perpendiculaire à l'axe central des tubes, mais l'ensemble de ces deux tubes est mobile par rapport aux trois autres tubes. Ainsi, cet ensemble de deux tubes peut glisser selon l'axe central des tubes qui correspond également à l'axe longitudinal central du brûleur et dans les deux sens de cet axe. Ce mouvement en avant ou en arrière ne peut toutefois conduire à ce que du côté du four les extrémités des deux tubes de plus petits diamètres dépassent les extrémités des trois autres tubes.

Ce mouvement des deux tubes centraux (T1, T2) peut être obtenu par tout moyen connu de l'homme du métier et notamment à l'aide d'un soufflet mécanique qui est généralement placé à l'extrémité de ces deux tubes opposée au four. Ce soufflet peut être positionné de manière à ce que l'axe longitudinal du soufflet soit parallèle aux premier et deuxième tubes (T1, T2), et de manière à ce que la première extrémité du soufflet soit fixe et la seconde extrémité du soufflet soit mobile et coopère avec la paroi extérieure du deuxième tube (T2). Ainsi, par compression ou extension du soufflet, la seconde extrémité du soufflet coopérant avec la paroi extérieure du deuxième tube (T2) entraînera dans son mouvement le deuxième tube (T2) et le premier tube (T1), puisque ce dernier est solidaire du deuxième tube (T2). Ce soufflet mécanique est généralement contrôlé à l'aide d'une vis qui selon le sens dans laquelle on la tourne, comprime ou étend le soufflet et donc fait avancer ou reculer les tubes centraux (T1, T2).

Selon l'invention, l'injecteur qui termine l'espace formé entre les premier et deuxième tubes (T1, T2) doit présenter une forme telle que le gaz qui y est introduit soit dirigé vers la périphérie du brûleur dans le sens d'injection des gaz dans le brûleur. Un tel injecteur peut être obtenu par inflexion des extrémités du côté du four des premier et deuxième tubes vers la périphérie du brûleur. L'injecteur peut également se présenter sous la forme d'une couronné métallique percée d'au moins une couronne d'orifices (C₁₋₂). Par couronne d'orifices, on entend des orifices tous placés à égale distance de l'axe central du brûleur. Selon un mode préféré, la couronne métallique est percée de deux couronnes concentriques (C1, C2) d'orifices orientés vers la périphérie du brûleur dans le sens d'injection des gaz dans le brûleur. Pour des raisons pratiques, tous les orifices d'une même couronne d'orifices sont généralement orientés selon le même angle par rapport à l'axe central du brûleur. Toutefois, les orifices peuvent également être orientés selon des angles différents, cette mise en oeuvre permettant un meilleur mélange des gaz par un effet de turbulence. Si, pour chacune des deux couronnes concentriques d'orifices, tous les orifices d'une même couronne d'orifices sont orientés selon le même angle par rapport à l'axe central du brûleur, alors, de préférence, les angles des orifices des deux couronnes concentriques d'orifices sont différents et la différence entre ces angles d'orientation est au moins égale à 5°. Ainsi, les orifices de la plus petite couronne d'orifices peuvent être orientés vers la périphérie du brûleur selon un angle compris entre 5 et 45° par rapport à l'axe central du brûleur. Les orifices de la plus grande couronne peuvent être orientés vers le périphérie du brûleur selon un angle compris entre 10 et 50° par rapport à l'axe central du brûleur. L'espace formé entre les premier et deuxième tubes est habituellement relié à l'extrémité opposée au four à une source d'un gaz comprenant du sulfure d'hydrogène et de l'ammoniac, dit gaz ammoniaqué.

Un brûleur pilote peut être placé dans le premier tube, le diamètre de ce brûleur pilote doit être inférieur à celui du premier tube de manière à pouvoir introduire un gaz d'allumage (gaz combustible de raffinerie) dans l'espace libre restant du premier tube. Généralement, lorsque le premier tube T1 se déplace, il n'entraîne pas dans son mouvement le brûleur pilote.

L'espace formé entre les deuxième et troisième tubes (T2, T3) est habituellement relié à une source d'un gaz comprenant de l'oxygène.

De préférence, l'espace le plus extérieur formé entre les quatrième et cinquième tubes (T4, T5) se termine du côté du four Claus par un injecteur orienté vers le centre du brûleur dans le sens d'injection des gaz dans le brûleur. Un tel injecteur peut être obtenu par inflexion des extrémités du côté du four des quatrième et cinquième tubes vers le centre du brûleur. L'injecteur peut également se présenter sous la forme d'une couronne métallique obturant cet espace et percée d'au moins une couronne d'orifices pour le passage du gaz présent dans cet espace. Ces orifices sont percés dans la couronne métallique de manière à ce qu'ils soient orientés vers le centre du brûleur dans le sens d'injection des gaz dans le brûleur. Pour des raisons pratiques, il est préférable que tous les orifices de la couronne d'orifices soient orientés selon le même angle par rapport à l'axe central du brûleur. Toutefois, les orifices peuvent également être orientés selon des angles différents, cette mise en oeuvre permettant un meilleur mélange des gaz par un effet de turbulence. Si, tous les orifices d'une même couronne d'orifices sont orientés selon le même angle par rapport à l'axe central du brûleur, alors, de préférence, ces orifices de la couronne sont orientés vers le centre du brûleur selon un angle compris entre 5 et 45°, encore plus préférentiellement compris entre 10 et 20° par rapport à l'axe central du brûleur. La section de ces orifices peut être de toute forme. L'espace formé entre les quatrième et cinquième tubes est habituellement relié à une source d'un gaz comprenant du sulfure d'hydrogène et pas d'ammoniac, dit gaz acide.

Selon une variante de l'invention, le brûleur comprend un tube intermédiaire (T3') placé entre le troisième tube (T3) et le quatrième tube (T4). Ce tube intermédiaire (T3') est fixe comme les troisième, quatrième et cinquième tubes (T3, T4 et T5) et son extrémité du côté du four se trouve dans le même plan perpendiculaire à l'axe central des les troisième, quatrième et cinquième tubes (T3, T4 et T5). Selon cette variante, de préférence, l'espace formé entre le troisième tube (T3) et le tube intermédiaire (T3') se termine du côté du four Claus par un injecteur orienté vers le centre du brûleur dans le sens d'injection des gaz dans le brûleur. Un tel injecteur peut être obtenu par inflexion des extrémités du côté du four du troisième tube (T3) et du tube intermédiaire(T3') vers le centre du brûleur. L'injecteur peut également se présenter du côté du four sous la forme d'une couronne métallique (C₃₋₃) obturant l'extrémité de cet espace et percée d'au moins une couronne d'orifices pour le passage du gaz présent dans cet espace. Ces orifices sont percés dans la couronne métallique de manière à ce qu'ils soient orientés vers le centre du brûleur dans le sens d'injection des gaz dans le brûleur. Pour des raisons pratiques, il est préférable que tous les orifices de la couronne d'orifices soient orientés selon le même angle par rapport à l'axe central du brûleur. Toutefois, les orifices peuvent également être orientés selon des angles différents, cette mise en oeuvre permettant un meilleur mélange des gaz par un effet de turbulence. Si, tous les orifices d'une même couronne d'orifices sont orientés selon le même angle par rapport à l'axe central du brûleur, alors, de préférence, ces orifices sont orientés vers le centre du brûleur selon un angle compris entre 5 et 45° par rapport à l'axe central du brûleur. Ces orifices peuvent être de toute forme.

Selon cette dernière variante, l'espace formé entre le troisième tube (T3) et le tube intermédiaire (T3') et l'espace formé entre le troisième tube et le quatrième tube (T3, T4) peuvent être reliés à une même source d'un gaz comprenant de l'oxygène. Généralement, une vanne est placée entre la source du gaz comprenant de l'oxygène et l'espace formé entre le troisième tube (T3) et le tube intermédiaire (T3').

Les diamètres des cinq tubes et les diamètres des orifices des couronnes (injecteurs) sont définis en fonction des vitesses dans les tubes et des rapports de vitesses au nez du brûleur que l'on souhaite donner à chacun de ces gaz injectés dans le brûleur. Les vitesses dans les tubes dépendent des débits moyens des flux entrant dans le brûleur. Les débits des gaz riches en oxygène découlent directement de leur concentration en oxygène, des débits des flux de gaz acides ainsi que de la teneur moyenne du gaz ammoniaqué en NH₃. Les débits moyens des flux sont imposés par la raffinerie dans laquelle est mis en oeuvre le procédé de l'invention, elle-même limitée par les possibilités de traitement de l'unité Claus (dimensions du four Claus et caractéristiques de l'échangeur thermique disposé à la sortie dudit four Claus). En fonction de ces paramètres, l'homme du métier est parfaitement à même de déterminer les diamètres des tubes et les diamètres des orifices pour que les vitesses et rapports de vitesses désirés soient obtenus.

Généralement, les diamètres des orifices des couronnes doivent être tels que :
- le rapport de la vitesse du gaz ammoniaqué sur la vitesse du gaz riche en oxygène soit compris entre 0,1 et 0,8 ou entre 1,2 et 5, les vitesses étant prises à l'extrémité du brûleur du côté du four, et
- le rapport de la vitesse du gaz acide sur la vitesse du gaz moins riche en oxygène soit compris entre 0,1 et 0,8 ou entre 1,2 et 5, les vitesses étant prises à l'extrémité du brûleur du côté du four.

Le brûleur selon l'invention est de préférence constitué d'un alliage austénitique comprenant du chrome et une haute teneur en nickel.

L'invention concerne également un premier procédé d'oxydation partielle dans un four Claus d'un flux de gaz comprenant du sulfure d'hydrogène et de l'ammoniac, dit gaz ammoniaqué, et d'un flux de gaz comprenant du sulfure d'hydrogène et pas d'ammoniac, dit gaz acide, à l'aide de flux de gaz comprenant de l'oxygène, dans lequel :
● on utilise le brûleur défini précédemment,
● si la teneur en NH₃ du gaz ammoniaqué à traiter est supérieure à la valeur moyenne en NH₃ du gaz ammoniaqué pour laquelle le brûleur est dimensionné, les tubes centraux (T1, T2) sont positionnés de manière à ce que leurs extrémités du côté du four soient dans un plan différent de celui des extrémités des autres tubes (T3-T5),
● si la teneur en NH₃ du gaz ammoniaqué à traiter est inférieure ou égale à la valeur moyenne en NH₃ du gaz ammoniaqué pour laquelle le brûleur est dimensionné, les tubes centraux (T1, T2) sont positionnés de manière à ce que leurs extrémités du côté du four soient dans le même plan que celui des extrémités des autres tubes (T3-T5),
● on injecte le gaz ammoniaqué dans l'espace formé par les premiers et deuxième tubes (T1, T2),
● on injecte le gaz acide dans l'espace formé par les quatrième et cinquième tubes (T4, T5),
● on injecte un gaz riche en oxygène dans l'espace formé par les deuxième et troisième tubes (T2, T3),
● on injecte un gaz moins riche en oxygène dans l'espace formé par les troisième et quatrième tubes (T3, T4).

Le brûleur utilisé dans ce premier procédé présente les caractéristiques du brûleur précédemment défini. En outre, ce brûleur est dimensionné pour l'élimination totale de l'ammoniac contenu dans le gaz ammoniaqué qui y est introduit et ceci pour une valeur moyenne de la concentration en NH₃ dans le gaz ammoniaqué, l'élimination de l'ammoniac étant totale pour cette valeur moyenne lorsque les tubes centraux (T1, T2) sont poussés complètement vers l'extrémité du brûleur du côté du four, en position dite avant.

Selon ce premier procédé de l'invention, lorsqu'on observe un changement notable des conditions de fonctionnement de l'unité Claus lié à la présence d'ammoniac ou des unités de la raffinerie produisant des gaz contenant de l'ammoniac, on mesure la teneur moyenne en NH₃ dans le gaz ammoniaqué à traiter. En fonction de la différence entre la valeur de la mesure de concentration en NH₃ du gaz ammoniaqué à traiter et la valeur moyenne de concentration en NH₃ du gaz ammoniaqué pour laquelle le brûleur est dimensionné, les extrémités des tubes centraux (T1, T2) sont positionnées par rapport aux extrémités des autres tubes (T3-T5) correspondant à l'extrémité du brûleur côté four. Ainsi, on éloigne les extrémités côté four des tubes centraux (T1, T2) des extrémités côté four des autres tubes (T3-T5) si la mesure de la teneur en NH₃ dans le gaz ammoniaqué à traiter est supérieure à la valeur moyenne de concentration en NH₃ du gaz ammoniaqué pour laquelle le brûleur est dimensionné. On éloigne donc les tubes centraux du four. Cette opération a pour effet de permettre, aux extrémités des deux tubes centraux (T1, T2) côté four, le mélange du gaz ammoniaqué à traiter avec un gaz plus riche en oxygène, donc d'augmenter la température de la flamme à cet endroit et d'élever, par conséquent, le rendement de transformation de l'ammoniac. On peut donc répondre à l'élévation de concentration en ammoniac dans le gaz, ammoniaqué à traiter et obtenir une destruction efficace de cette espèce sans changer de brûleur. Par contre, si la mesure de la teneur en NH₃ dans le gaz ammoniaqué à traiter est inférieure ou égale à la valeur moyenne de concentration en NH₃ du gaz ammoniaqué pour laquelle le brûleur est dimensionné, on repousse les tubes centraux vers l'extrémité du brûleur côté four, de façon à placer les extrémités côté four de tous les tubes (T1-T5) dans le même plan et permettre ainsi un mélange du gaz ammoniaqué à traiter avec un gaz moins riche en oxygène.

Ce premier procédé selon l'invention est généralement mis en oeuvre dans un four Claus conventionnel.

Selon ce premier procédé, on peut utiliser un brûleur comprenant un tube intermédiaire (T3') et pour lequel une vanne est placée entre la source de gaz moins riche en oxygène et l'espace formé entre le troisième tube (T3) et le tube intermédiaire (T3') tel que décrit précédemment. Lorsqu'un tel brûleur est utilisé, on peut contrôler l'ouverture de la vanne placée entre l'espace formé entre le troisième tube (T3) et le tube intermédiaire (T3') et la source de gaz moins riche en oxygène en fonction du débit du gaz acide, notamment lors des phases de démarrage de l'unité ou d'arrêt de l'alimentation en oxygène.

Ce premier procédé selon l'invention s'applique à tout type de gaz ammoniaqué. Généralement, la concentration en sulfure d'hydrogène dans le flux de gaz ammoniaqué est généralement comprise entre 10 et 90 % molaire ; la concentration en ammoniac dans ce flux de gaz est généralement supérieure ou égale à 5 % molaire et de préférence comprise entre 10 et 60 % molaire. Ce gaz peut également comprendre 10 à 60 % molaire de vapeur d'eau.

Dans le premier procédé selon l'invention, les gaz comprenant de l'oxygène peuvent être de l'air ou de l'air enrichi en oxygène, ce dernier étant de préférence enrichi en une teneur supérieure à 25 % molaire, encore plus préférentiellement en une teneur comprise entre 40 et 100 % molaire, le gaz enrichi à 100 % en oxygène correspondant à de l'oxygène pur. La teneur en oxygène en laquelle ledit gaz est enrichi en oxygène, correspond à la fraction molaire en oxygène dudit gaz enrichi. A titre d'exemple, de l'air enrichi en oxygène à 50 %, consiste en un mélange gazeux comprenant 50 % molaire d'oxygène. Selon un mode préféré, le gaz riche en oxygène est de l'air enrichi en oxygène, voire de l'oxygène pur, et le gaz moins riche en oxygène est de l'air. Lorsque le brûleur utilisé comprend un tube intermédiaire (T3') entre le troisième et le quatrième tubes, le gaz moins riche en oxygène peut être introduit à la fois dans l'espace formé par le troisième tube et le tube intermédiaire et dans l'espace formé par le tube intermédiaire et le quatrième tube: Ces deux espaces sont reliés à la même source de gaz moins riche en oxygène.

Selon le premier procédé de l'invention, la teneur en ammoniac du gaz comprenant du sulfure d'hydrogène et pas d'ammoniac, dit gaz acide, est inférieure à 5 % molaire (< 5 %). La concentration en sulfure d'hydrogène dans ce flux de gaz peut, elle, être d'au moins 10 % molaire, et est plus généralement comprise entre 60 et 95 % molaire. Le flux de gaz acide est essentiellement constitué de sulfure d'hydrogène et de l'un au moins des composés suivants : vapeur d'eau, gaz carbonique, hydrocarbures et autres composés sulfurés.

L'invention concerne également un second procédé d'oxydation partielle dans un four Claus d'un flux de gaz comprenant du sulfure d'hydrogène et pas d'ammoniac, dit gaz acide, à l'aide d'au moins un flux de gaz comprenant de l'oxygène, dans lequel :
- on utilise le brûleur défini précédemment,
- on injecte le gaz acide dans l'espace formé par les premiers et deuxième tubes (T1, T2) et dans l'espace formé par les quatrième et cinquième tubes (T4, T5),
- on injecte au moins un gaz comprenant de l'oxygène dans l'espace formé par les deuxième et troisième tubes (T2, T3) et dans l'espace formé par les troisième et quatrième tubes (T3, T4).

Ce second procédé est généralement mis en oeuvre alternativement au premier procédé précédemment décrit lorsque le gaz ammoniaqué est indisponible par exemple lors de l'arrêt des unités de raffinage produisant du gaz ammoniaqué. Dans ce cas, le gaz acide est introduit à la place du gaz ammoniaqué dans l'espace formé par les premiers et deuxième tubes (T1, T2) en plus de son introduction habituelle dans l'espace formé par les quatrième et cinquième tubes (T4, T5).

Simultanément à l'introduction du gaz acide, au moins un gaz comprenant de l'oxygène est injecté dans les espaces formés par les deuxième et troisième tubes (T2, T3) et par les troisième et quatrième tubes (T3, T4). On peut soit introduire le même gaz oxygéné dans ces deux espaces (généralement de l'air), soit introduire des gaz présentant des concentrations en oxygène différentes, comme cela est décrit dans le fonctionnement du premier procédé selon l'invention.

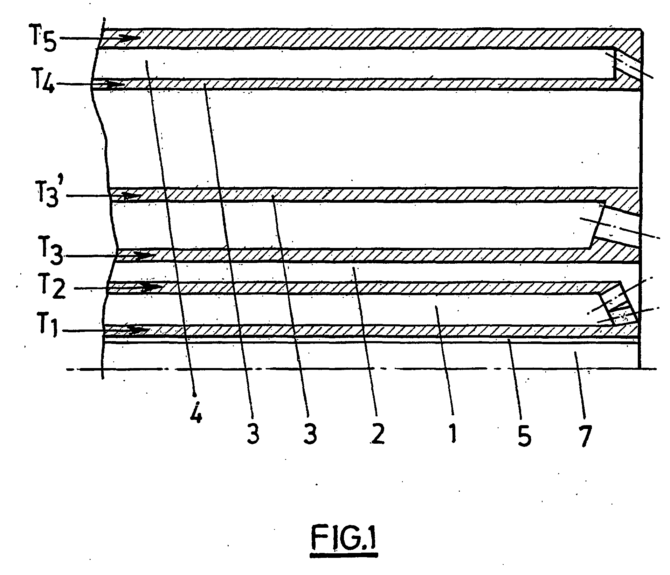

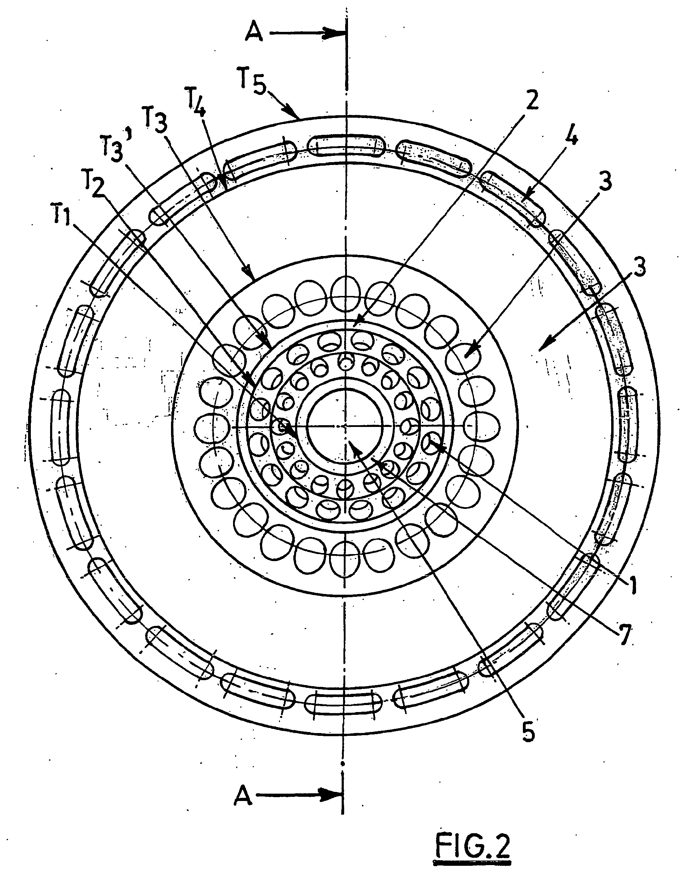

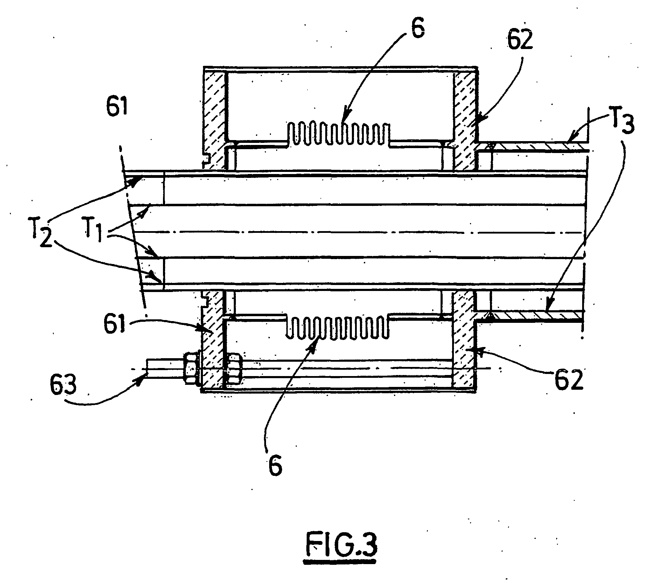

Les figures 1, 2 et 3 illustrent le brûleur et le premier procédé selon l'invention. Le brûleur est constitué de 6 tubes concentriques (T1, T2, T3, T3', T4, T5) formant 6 espaces concentriques. A l'extrémité qui se trouve du côté four :
- l'espace formé par les premier et deuxième tubes (T1, T2) débouche sur deux couronnes d'orifices (C1, C2), lesdits orifices présentant une coupe circulaire,
- l'espace formé par le troisième tube (T3) et le tube intermédiaire (T3') débouche sur une couronne d'orifices (C_{3-3'}), lesdits orifices présentant une coupe circulaire,
- l'espace formé par les quatrième et cinquième tubes (T4, T5) débouche sur une couronne d'orifices (C₄₋₅) lesdits orifices présentant une coupe ovale.

Au bout de l'espace formé par les premier et deuxième tubes (T1, T2), tous les orifices de la couronne de plus petit diamètre (C1) sont orientés vers la périphérie du brûleur selon un même angle par rapport à l'axe central du brûleur et tous les orifices de la couronne de plus grand diamètre (C2) sont orientés vers la périphérie du brûleur selon un même angle par rapport à l'axe central du brûleur. Au bout de l'espace formé par le troisième tube et le tube intermédiaire (T3, T3'), tous les orifices de la couronne (C_{3-3'}) sont orientés vers le centre du brûleur d'un même angle par rapport à l'axe central du brûleur. Au bout de l'espace formé par les quatrième et cinquième tubes (T4, T5), tous les orifices de la couronne (C₄₋₅) sont orientés vers le centre du brûleur d'un même angle par rapport à l'axe central du brûleur.

Dans le premier tube (T1) est placé un brûleur pilote (5) pour l'allumage de la flamme. On introduit également dans cet espace un gaz de combustion de raffinerie (7) pour allumer la flamme et la maintenir.

Un soufflet (6) est fixé par son extrémité (61) sur le tube (T2) et par son autre extrémité (62) sur le tube fixe (T3). Une vis (63) permet de comprimer ou d'étendre le soufflet.

On introduit dans le brûleur :
- le gaz comprenant du sulfure d'hydrogène et de l'ammoniac (1) dans l'espace formé par les premier et deuxième tubes (T1, T2),
- le gaz riche en oxygène (2) dans l'espace formé par les deuxième et troisième tubes (T2, T3),
- le gaz moins riche en oxygène (3) dans l'espace formé par le troisième tube (T3) et le tube intermédiaire (T3') et dans l'espace formé par le tube intermédiaire (T3') et le quatrième tube (T4),
- le gaz acide (4) dans l'espace formé par les quatrième et cinquième tubes (T4, T5).

Si la valeur de la teneur en ammoniac du gaz ammoniaqué est supérieure à la valeur moyenne en ammoniac de ce gaz fixée pour le dimensionnement du brûleur, alors les tubes centraux (T1, T2) sont reculés en position dite arrière par manipulation de la vis contrôlant le déplacement du soufflet. Si, ensuite, la valeur de la teneur en ammoniac du gaz ammoniaqué devient proche ou inférieure à la valeur moyenne en ammoniac de ce gaz fixée pour le dimensionnement du brûleur, alors les tubes centraux (T1, T2) sont repoussés en position dite avant par manipulation de cette même vis.

## Revendications

1. Brûleur de gaz pour four Claus composé d'au moins cinq tubes concentriques (T1-T5), formant cinq espaces concentriques pour l'introduction de gaz, le premier tube (T1) étant le tube de plus petit diamètre et le cinquième tube (T5) étant celui de plus grand diamètre, dans lequel :
• les extrémités du côté du four Claus des troisième, quatrième et cinquième tubes sont dans le même plan,
• les deux tubes centraux (T1, T2) sont solidaires l'un par rapport à l'autre et mobiles selon l'axe longitudinal central du brûleur par rapport aux autres tubes (T3-T5), leurs extrémités du côté du four Claus ne pouvant dépasser le plan formé par les extrémités des trois autres tubes,
• l'espace formé entre les premier et deuxième tubes (T1, T2) se termine du côté du four Claus par un injecteur orienté vers la périphérie du brûleur dans le sens d'injection des gaz dans le brûleur.

2. Brûleur selon la revendication 1, **caractérisé en ce que** les tubes centraux (T1, T2) sont déplacés à l'aide d'un soufflet mécanique.

3. Brûleur selon la revendication 1 ou 2, **caractérisé en ce que** l'injecteur qui termine l'espace formé entre les premier et deuxième tubes (T1, T2) se présente sous la forme d'une couronne métallique percée d'au moins une, couronne d'orifices (C1, C2).

4. Brûleur selon la revendication 3, **caractérisé en ce que** l'injecteur qui termine l'espace formé entre les premier et deuxième tubes (T1, T2) se présente sous la forme d'une couronne métallique percée de deux couronnes concentriques (C1, C2) d'orifices orientés vers la périphérie du brûleur dans le sens d'injection des gaz dans le brûleur.

5. Brûleur selon la revendication 4, **caractérisé en ce que** pour chacune des deux couronnes concentriques (C1, C2) d'orifices terminant l'espace formé entre les premier et deuxième tubes (T1, T2), tous les orifices d'une même couronne sont orientés selon le même angle par rapport à l'axe central du brûleur.

6. Brûleur selon la revendication 5, **caractérisé en ce que** les angles des orifices des deux couronnes concentriques (C1, C2) d'orifices terminant l'espace formé entre les premier et deuxième tubes (T1, T2) sont différents et la différence entre ces angles d'orientation est au moins égale à 5°.

7. Brûleur selon l'une des revendications 4 à 6, **caractérisé en ce que** les orifices de la plus petite couronne (C1) terminant l'espace formé entre les premier et deuxième tubes (T1, T2) sont orientés vers le périphérie du brûleur selon un angle compris entre 5 et 45° par rapport à l'axe central du brûleur.

8. Brûleur selon l'une des revendications 4 à 7, **caractérisé en ce que** les orifices de la plus grande couronne (C2) terminant l'espace formé entre les premier et deuxième tubes (T1, T2) sont orientés vers le périphérie du brûleur selon un angle compris entre 10 et 50° par rapport à l'axe central du brûleur.

9. Brûleur selon l'une des revendications précédentes, **caractérisé en ce qu'**un brûleur pilote (5) est placé dans le premier tube (T1).

10. Brûleur selon l'une des revendications précédentes, **caractérisé en ce que** l'espace le plus extérieur formé entre les quatrième et cinquième tubes (T4, T5) se termine du côté du four Claus par un injecteur orienté vers le centre du brûleur dans le sens d'injection des gaz dans le brûleur.

11. Brûleur selon la revendication 10, **caractérisé en ce que** l'injecteur qui termine l'espace formé entre les quatrième et cinquième tubes (T4, T5) se présente sous la forme d'au moins une couronne métallique percée d'au moins une couronne d'orifices (C₄₋₅).

12. Brûleur selon la revendication 11, **caractérisé en ce que** les orifices de la couronne d'orifices (C₄₋₅) terminant l'espace le plus extérieur formé entre les quatrième et cinquième tubes (T4, T5) sont orientés vers le centre du brûleur selon un angle compris entre 5 et 45° par rapport à l'axe central du brûleur.

13. Brûleur selon l'une des revendications précédentes, **caractérisé en ce qu'**il comprend un tube intermédiaire (T3') placé entre le troisième tube (T3) et le quatrième tube (T4).

14. Brûleur selon la revendication 13 **caractérisé en ce que** l'espace formé entre le troisième tube (T3) et le tube intermédiaire (T3') se termine du côté du four Claus par un injecteur orienté vers le centre du brûleur dans le sens d'injection des gaz dans le brûleur.

15. Brûleur selon la revendication 14 **caractérisé en ce que** l'injecteur qui termine l'espace formé entre le troisième tube (T3) et le tube intermédiaire (T3') se présente sous la forme d'une couronne métallique percée d'au moins une couronne d'orifices (C_{3-3'}).

16. Brûleur selon la revendication 15 **caractérisé en ce que** les orifices de la couronne (C_{3-3'}) terminant l'espace formé entre les troisième et quatrième tubes (T3, T4) sont orientés vers le centre du brûleur selon un angle compris entre 5 et 45° par rapport à l'axe central du brûleur.

17. Brûleur selon l'une des revendications 13 à 16, **caractérisé en ce que** l'espace formé entre le troisième tube (T3) et le tube intermédiaire (T3') et l'espace formé entre le troisième tube et le quatrième tube (T3, T4) sont reliés à une même source de gaz comprenant de l'oxygène.

18. Brûleur selon la revendication 17 **caractérisé en ce qu'**une vanne est placée entre la source de gaz comprenant de l'oxygène et l'espace formé entre le troisième tube (T3) et le tube intermédiaire (T3').

19. Procédé d'oxydation partielle dans un four Claus d'un flux de gaz comprenant du sulfure d'hydrogène et de l'ammoniac, dit gaz ammoniaqué (1), et d'un flux de gaz comprenant du sulfure d'hydrogène et pas d'ammoniac (4), dit gaz acide, à l'aide d'au moins un flux de gaz comprenant de l'oxygène (2, 3), dans lequel :
• on utilise le brûleur selon l'une des revendications 1 à 18,
• si la teneur en NH₃ du gaz ammoniaqué à traiter est supérieure à la valeur moyenne en NH₃ du gaz ammoniaqué pour laquelle le brûleur est dimensionné, les tubes centraux (T1, T2) sont positionnés de manière à ce que leurs extrémités du côté du four soient dans un plan différent de celui des extrémités des autres tubes (T3-T5),
• si la teneur en NH₃ du gaz ammoniaqué à traiter est inférieure ou égale à la valeur moyenne en NH₃ du gaz ammoniaqué pour laquelle le brûleur est dimensionné, les tubes centraux (T1, T2) sont positionnés de manière à ce que leurs extrémités du côté du four soient dans le même plan que celui des extrémités des autres tubes (T3-T5),
• on injecte le gaz ammoniaqué (1) dans l'espace formé par les premiers et deuxième tubes (T1, T2),
• on injecte le gaz acide (4) dans l'espace formé par les quatrième et cinquième tubes (T4, T5),
• on injecte un gaz riche en oxygène (2) dans l'espace formé par les deuxième et troisième tubes (T2, T3),
• on injecte un gaz moins riche en oxygène (3) dans l'espace formé par les troisième et quatrième tubes (T3, T4).

20. Procédé selon la revendication 19, **caractérisé en ce qu'**on utilise le brûleur selon la revendication 18 et **en ce qu'**on contrôle l'ouverture de la vanne placée entre l'espace formé entre le troisième tube (T3) et le tube intermédiaire (T3') et la source de gaz moins riche en oxygène (3) en fonction du débit du gaz acide (4).

21. Procédé selon l'une des revendications 19 ou 20, **caractérisé en ce que** les gaz comprenant de l'oxygène (2, 3) sont de l'air enrichi en oxygène en une teneur supérieure à 25 % molaire, de préférence en une teneur comprise entre 40 et 100 % molaire.

22. Procédé selon rune des revendications 19 à 21, **caractérisé en ce que** le gaz riche en oxygène (2) est de l'oxygène pur.

23. Procédé d'oxydation partielle dans un four Claus d'un flux de gaz comprenant du sulfure d'hydrogène et pas d'ammoniac (4), dit gaz acide, à l'aide d'au moins un flux de gaz comprenant de l'oxygène (2, 3), dans lequel :
● on utilise le brûleur selon l'une des revendications 1 à 18,
● on injecte le gaz acide (4) dans l'espace formé par les premiers et deuxième tubes (T1, T2) et dans l'espace formé par les quatrième et cinquième tubes (T4, T5),
● on injecte au moins un gaz comprenant de l'oxygène (2,3) dans l'espace formé par les deuxième et troisième tubes (T2, T3) et dans l'espace formé par les troisième et quatrième tubes (T3, T4).

## Claims

1. Gas burner for a Claus furnace, composed of at least five concentric tubes (T1-T5), forming five concentric spaces for the introduction of gas, the first tube (T1) being the tube of smallest diameter and the fifth tube (T5) being that of largest diameter, in which:
● the ends on the side facing the Claus furnace of the third, fourth and fifth tubes lie in the same plane;
● the two central tubes (T1, T2) are fastened together and able to move along the central longitudinal axis of the burner with respect to the other tubes (T3-T5), their ends on the side facing the Claus furnace not being able to pass beyond the plane formed by the ends of the three other tubes; and
● the space formed between the first and second tubes (T1, T2) terminates, on the side facing the Claus furnace, in an injector oriented towards the periphery of the burner in the direction of injection of the gases into the burner.

2. Burner according to Claim 1, **characterized in that** the central tubes (T1, T2) are moved by means of a mechanical bellows.

3. Burner according to Claim 1 or 2, **characterized in that** the injector terminating the space formed between the first and second tubes (T1, T2) is in the form of a metal ring drilled with at least one ring of orifices (C1, C2) .

4. Burner according to Claim 3, **characterized in that** the injector terminating the space formed between the first and second tubes (T1, T2) is in the form of a metal ring drilled with two concentric rings (C1, C2) of orifices oriented towards the periphery of the burner in the direction of injection gases into the burner.

5. Burner according to Claim 4, **characterized in that**, for each of the two concentric rings (C1, C2) of orifices terminating the space formed between the first and second tubes (T1, T2), all the orifices of the same ring are oriented at the same angle relative to the central axis of the burner.

6. Burner according to Claim 5, **characterized in that** the angles of the orifices of the two concentric rings (C1, C2) of orifices terminating the space formed between the first and second tubes (T1, T2) are different and the difference between these angles of orientation is at least 5°.

7. Burner according to one of Claims 4 to 6, **characterized in that** the orifices of the smaller ring (C1) terminating the space formed between the first and second tubes (T1, T2) are oriented towards the periphery of the burner at an angle of between 5 and 45° relative to the central axis of the burner.

8. Burner according to one of Claims 4 to 7, **characterized in that** the orifices of the larger ring (C2) terminating the space formed between the first and second tubes (T1, T2) are oriented towards the periphery of the burner at an angle of between 10 and 50° relative to the central axis of the burner.

9. Burner according to one of the preceding claims, **characterized in that** a pilot burner (5) is placed in the first tube (T1).

10. Burner according to one of the preceding claims, **characterized in that** the outermost space formed between the fourth and fifth tubes (T4, T5) terminates, on the side facing the Claus furnace, in an injector oriented towards the centre of the burner in the direction of injection of the gases into the burner.

11. Burner according to Claim 10, **characterized in that** the injector terminating the space formed between the fourth and fifth tubes (T4, T5) is in the form of at least one metal ring drilled with at least one ring of orifices (C₄₋₅) .

12. Burner according to Claim 11, **characterized in that** the orifices of the ring of orifices (C₄₋₅) terminating the outermost space formed between the fourth and fifth tubes (T4, T5) are oriented towards the centre of the burner at an angle of between 5 and 45° relative to the central axis of the burner.

13. Burner according to one of the preceding claims, **characterized in that** it includes an intermediate tube (T3') placed between the third tube (T3) and the fourth tube (T4).

14. Burner according to Claim 13, **characterized in that** the space formed between the third tube (T3) and the intermediate tube (T3') terminates, on the side facing the Claus furnace, in an injector oriented towards the centre of the burner in the direction of injection of the gases into the burner.

15. Burner according to Claim 14, **characterized in that** the injector terminating the space formed between the third tube (T3) and the intermediate tube (T3') is in the form of a metal ring drilled with at least one ring of orifices (C_{3-3'}) .

16. Burner according to Claim 15, **characterized in that** the orifices of the ring (C₃₋₃') terminating the space formed between the third and fourth tubes (T3, T4) are oriented towards the centre of the burner at an angle of between 5 and 45° relative to the central axis of the burner.

17. Burner according to one of Claims 13 to 16, **characterized in that** the space formed between the third tube (T3) and the intermediate tube (T3') and the space formed between the third and fourth tubes (T3, T4) are connected to the same supply of oxygen-containing gas.

18. Burner according to Claim 17, **characterized in that** a valve is placed between the supply of oxygen-containing gas and the space formed between the third tube (T3) and the intermediate tube (T3').

19. Partial oxidation process in a Claus furnace for a stream of gas containing hydrogen sulphide and ammonia, referred to as ammonia-containing gas (1), and for a stream of gas containing hydrogen sulphide and no ammonia (4), referred to as acid gas, using at least one stream of oxygen-containing gas (2, 3), in which process:
• the burner according to one of Claims 1 to 18 is used;
• if the NH₃ content of the ammonia-containing gas to be treated is greater than the average NH₃ content of the ammonia-containing gas for which the burner is designed, the central tubes (T1, T2) are positioned so that their ends on the side facing the furnace lie in a plane different from that of the ends of the other tubes (T3-T5);
• if the NH₃ content of the ammonia-containing gas to be treated is less than or equal to the average NH₃ content of the ammonia-containing gas for which the burner is designed, the central tubes (T1, T2) are positioned so that their ends on the side facing the furnace lie in the same plane as that of the ends of the other tubes (T3-T5);
• the ammonia-containing gas (1) is injected into the space formed by the first and second tubes (T1, T2) ;
• the acid gas (4) is injected into the space formed by the fourth and fifth tubes (T4, T5) ;
• an oxygen-rich gas (2) is injected into the space formed by the second and third tubes (T2, T3); and
• a gas less rich in oxygen (3) is injected into the space formed by the third and fourth tubes (T3, T4).

20. Process according to Claim 19, **characterized in that** the burner according to Claim 18 is used and **in that** the opening of the valve placed between the space formed between the third tube (T3) and the intermediate tube (T3') and the supply of gas less rich in oxygen (3) is controlled according to the flow rate of the acid gas (4).

21. Process according to either of Claims 19 and 20, **characterized in that** the oxygen-containing gases (2, 3) are oxygen-enriched air with a content of greater than 25 mol%, preferably a content of between 40 and 100 mol%.

22. Process according to one of Claims 19 to 21, **characterized in that** the oxygen-rich gas (2) is pure oxygen.

23. Partial oxidation process in a Claus furnace for a stream of gas containing hydrogen sulphide and no ammonia (4), referred to as acid gas, using at least one stream of oxygen-containing gas (2, 3), in which process:
• the burner according to one of Claims 1 to 18 is used;
• the acid gas (4) is injected into the space formed by the first and second tubes (T1, T2) and into the space formed by the fourth and fifth tubes (T4, T5); and
• at least one oxygen-containing gas (2, 3) is injected into the space formed by the second and third tubes (T2, T3) and into the space formed by the third and fourth tubes (T3, T4).

## Patentansprüche

1. Gasbrenner für Claus-Ofen bestehend aus mindestens fünf konzentrischen Rohren (T1-T5), die fünf konzentrische Räume für das Einführen von Gas bilden, wobei das erste Rohr (T1) das Rohr mit dem kleinsten Durchmesser und das fünfte Rohr (T5) das mit dem größten Durchmesser ist, bei dem:
● die Enden auf der Claus-Ofen-Seite des dritten, vierten und fünften Rohrs in der gleichen Ebene liegen,
● die zwei zentralen Rohre (T1, T2) in Bezug aufeinander fest verbunden und gemäß der zentralen Längsachse des Brenners in Bezug auf die anderen Rohre (T3-T5) beweglich sind, wobei ihre Enden auf der Claus-Ofen-Seite die Ebene nicht überschreiten können, die von den Enden der drei anderen Rohre gebildet wird,
● der Raum, der zwischen dem ersten und dem zweiten Rohr (T1, T2) gebildet ist, auf der Seite des Claus-Ofens durch eine Düse endet, die zu der Peripherie des Brenners in die Einspritzrichtung der Gase in den Brenner ausgerichtet ist.

2. Brenner nach Anspruch 1, **dadurch gekennzeichnet, dass** die zentralen Rohre (T1, T2) mit Hilfe eines mechanischen Balgs verschoben werden.

3. Brenner nach Anspruch 1 oder 2, **dadurch gekennzeichnet, dass** die Düse, die den Raum beendet, der zwischen dem ersten und dem zweiten Rohr (T1, T2) gebildet ist, die Form eines mechanischen Kranzes hat, der mit mindestens einem Kranz von Öffnungen (C1, C2) durchbohrt ist.

4. Brenner nach Anspruch 3, **dadurch gekennzeichnet, dass** die Düse, die den Raum beendet, der zwischen dem ersten und dem zweiten Rohr (T1, T2) gebildet ist, die Form eines Metallkranzes hat, der mit zwei konzentrischen Kränzen (C1, C2) von Öffnungen durchbohrt ist, die zu der Peripherie des Brenners in die Einspritzrichtung der Gase in den Brenner ausgerichtet sind.

5. Brenner nach Anspruch 4, **dadurch gekennzeichnet, dass** für jeden der zwei konzentrischen Kränze (C1, C2) mit Öffnungen, die den zwischen dem ersten und dem zweiten Rohr (T1, T2) gebildeten Raum beenden, alle Öffnungen eines gleichen Kranzes gemäß dem gleichen Winkel in Bezug auf die Mittenachse des Brenners ausgerichtet sind.

6. Brenner nach Anspruch 5, **dadurch gekennzeichnet, dass** die Winkel der Öffnungen der zwei konzentrischen Kränze (C1, C2) von Öffnungen, die den zwischen dem ersten und dem zweiten Rohr (T1, T2) gebildeten Raum beenden, unterschiedlich sind, und dass der Unterschied zwischen diesen Ausrichtungswinkeln mindestens 5° beträgt.

7. Brenner nach einem der Ansprüche 4 bis 6, **dadurch gekennzeichnet, dass** die Öffnungen des kleinsten Kranzes (C1) der den Raum beendet, der zwischen dem ersten und dem zweiten Rohr (T1, T2) gebildet ist, zu der Peripherie des Brenners mit einem Winkel zwischen 5 und 45° in Bezug auf die Mittenachse des Brenners ausgerichtet sind.

8. Brenner nach einem der Ansprüche 4 bis 7, **dadurch gekennzeichnet, dass** die Öffnungen des größten Kranzes (C2), der den Raum beendet, der zwischen dem ersten und dem zweiten Rohr (T1, T2) gebildet ist, zu der Peripherie des Brenners gemäß einem Winkel zwischen 10 und 50° in Bezug auf die Mittenachse des Brenners ausgerichtet sind.

9. Brenner nach einem der vorhergehenden Ansprüche, **dadurch gekennzeichnet, dass** ein Pilotbrenner (5) in dem ersten Rohr (T1) angeordnet ist.

10. Brenner nach einem der vorhergehenden Ansprüche, **dadurch gekennzeichnet, dass** der äußerste Raum, der zwischen dem vierten und dem fünften Rohr (T4, T5) gebildet ist, auf der Claus-Ofen-Seite durch eine Düse endet, die zu der Mitte des Brenners in die Einspritzrichtung der Gase in den Brenner ausgerichtet ist.

11. Brenner nach Anspruch 10, **dadurch gekennzeichnet, dass** die Düse, die den Raum beendet, der zwischen dem vierten und dem fünften Rohr (T4, T5) gebildet ist, die Form mindestens eines Metallkranzes hat, der mit mindestens einem Kranz von Öffnungen (C₄₋₅) durchbohrt ist.

12. Brenner nach Anspruch 11, **dadurch gekennzeichnet, dass** der Kranz von Öffnungen (C₄₋₅), der den äußersten Raum beendet, der zwischen dem vierten und dem fünften Rohr (T4, T5) gebildet ist, zu der Mitte des Brenners gemäß einem Winkel zwischen 5 und 45° in Bezug auf die Mittenachse des Brenners ausgerichtet ist.

13. Brenner nach einem der vorhergehenden Ansprüche, **dadurch gekennzeichnet, dass** er ein Zwischenrohr (T3') umfasst, das zwischen dem dritten Rohr (T3) und dem vierten Rohr (T4) angeordnet ist.

14. Brenner nach Anspruch 13, **dadurch gekennzeichnet, dass** der Raum, der zwischen dem dritten Rohr (T3) und dem Zwischenrohr (T3') gebildet ist, auf der Claus-Ofen-Seite in einer Düse endet, die zu der Mitte des Brenners in die Einspritzrichtung der Gase in den Brenner ausgerichtet ist.

15. Brenner nach Anspruch 14, **dadurch gekennzeichnet, dass** die Düse, die den Raum beendet, der zwischen dem dritten Rohr (T3) und dem Zwischenrohr (T3') gebildet ist, die Form eines Metallkranzes hat, der mit mindestens einem Kranz von Öffnungen (C_{3-3'}) durchbohrt ist.

16. Brenner nach Anspruch 15, **dadurch gekennzeichnet, dass** die Öffnungen des Kranzes (C_{3-3'}), die den Raum beenden, der zwischen dem dritten und dem vierten Rohr (T3, T4) gebildet ist, zu der Mitte des Brenners gemäß einem Winkel zwischen 5 und 45° in Bezug auf die Mittenachse des Brenners ausgerichtet sind.

17. Brenner nach einem der Ansprüche 13 bis 16, **dadurch gekennzeichnet, dass** der Raum, der zwischen dem dritten Rohr (T3) und dem Zwischenrohr (T3') gebildet ist, und der Raum, der zwischen dem dritten Rohr und dem vierten Rohr (T3, T4) gebildet ist, an eine gleiche Gasquelle, die Sauerstoff enthält, angeschlossen sind.

18. Brenner nach Anspruch 17, **dadurch gekennzeichnet, dass** ein Ventil zwischen der Gasquelle, die Sauerstoff enthält, und dem Raum, der zwischen dem dritten Rohr (T3) und dem Zwischenrohr (T3') gebildet ist, angeordnet ist.

19. Verfahren zur partiellen Oxidation in einem Claus-Ofen eines Gasstroms, der Schwefelwasserstoff und Ammoniak enthält, ammoniakhaltiges Gas (1) genannt, und eines Gasstroms, der Schwefelwasserstoff und kein Ammoniak (4) enthält, saueres Gas genannt, mit Hilfe mindestens eines Gasstroms, der Sauerstoff (2, 3) enthält, wobei:
● man den Brenner gemäß einem der Ansprüche 1 bis 18 verwendet,
● wenn der Gehalt an NH₃ des ammoniakhaltigen Gases, das zu verarbeiten ist, größer ist als der mittlere Wert an NH₃ des ammoniakhaltigen Gases, für den der Brenner ausgelegt ist, die zentralen Rohre (T1, T2) so positioniert sind, dass ihre Enden auf der Ofenseite in einer anderen Ebene liegen als die der Enden der anderen Rohre (T3-T5),
● wenn der Gehalt an NH₃ des Ammoniakgases, das zu verarbeiten ist, geringer oder gleich ist wie der mittlere Wert an NH₃ des ammoniakhaltigen Gases, für den der Brenner ausgelegt ist, die zentralen Rohre (T1, T2) so positioniert sind, dass ihre Enden auf der Ofenseite in der gleichen Ebene liegen wie die der Enden der anderen Rohre (T3-T5),
● man ammoniakhaltiges Gas (1) in den Raum einspritzt, der von dem ersten und dem zweiten Rohr (T1, T2) gebildet ist,
● man saueres Gas (4) in den Raum einspritzt, der von dem vierten und dem fünften Rohr (T4, T5) gebildet ist,
● man ein an Sauerstoff reichhaltiges Gas (2) in den Raum einspritzt, der von dem zweiten und dem dritten Rohr (T2, T3) gebildet ist,
● man ein an Sauerstoff weniger reichhaltiges Gas (3) in den Raum einspritzt, der von dem dritten und dem vierten Rohr (T3, T4) gebildet ist.

20. Verfahren nach Anspruch 19, **dadurch gekennzeichnet, dass** man den Brenner nach Anspruch 18 verwendet, und dass man das Öffnen des Ventils steuert, das zwischen dem Raum, der zwischen dem dritten Rohr (T3) und dem Zwischenrohr (T3') und der Gasquelle, die weniger reichhaltig an Sauerstoff (3) ist, angebracht ist, in Abhängigkeit von dem Durchsatz des saueren Gases (4) steuert.

21. Verfahren nach einem der Ansprüche 19 oder 20, **dadurch gekennzeichnet, dass** die Sauerstoff enthaltenden Gase (2, 3) mit Sauerstoff mit einem Gehalt größer als 25 % Mol angereicherte Luft sind, vorzugsweise mit einem Gehalt zwischen 40 und 100 % Mol.

22. Verfahren nach einem der Ansprüche 19 bis 21, **dadurch gekennzeichnet, dass** das an Sauerstoff reichhaltige Gas (2) reiner Sauerstoff ist.

23. Verfahren zur partiellen Oxidation in einem Claus-Ofen eines Gasstroms, der Schwefelwasserstoff und kein Ammoniak (4) enthält, saueres Gas genannt, mit Hilfe mindestens eines Gasstroms, der Sauerstoff (2, 3) enthält, wobei:
• man den Brenner gemäß einem der Ansprüche 1 bis 18 verwendet,
• man saueres Gas (4) in den Raum einspritzt, der von dem ersten und dem zweiten Rohr (T1, T2) gebildet ist, und in den Raum, der von dem vierten und dem fünften Rohr (T4, T5) gebildet ist,
• man mindestens ein Gas, das Sauerstoff (2, 3) enthält, in den Raum einspritzt, der von dem zweiten und dem dritten Rohr (T2, T3) gebildet ist, und in den Raum, der von dem dritten und dem vierten Rohr (T3, T4) gebildet ist.
